# EUROPEAN PATENT SPECIFICATION

(11) **EP 3 296 856 B1**
(45) Date of publication and mention of the grant of the patent: **10.11.2021**
(21) Application number: 17190660.5
(22) Date of filing: 12.09.2017
(51) Int. Cl.: G06F 3/12

(54) **INFORMATION PROCESSING APPARATUS, METHOD, AND PROGRAM**
INFORMATIONSVERARBEITUNGSVORRICHTUNG, -VERFAHREN UND -PROGRAMM
APPAREIL DE TRAITEMENT D'INFORMATIONS, PROCÉDÉ ET PROGRAMME

(30) Priority: 16.09.2016 JP 2016181573
(43) Date of publication of application: 21.03.2018
(73) Proprietor: CANON KABUSHIKI KAISHA, Ohta-ku Tokyo 146-8501 (JP)
(72) Inventor: SUZUKI, Shinya, Ohta-ku, Tokyo (JP)
(74) Representative: Canon Europe Limited

(56) References cited:
- EP-A1- 3 040 847
- US-A1- 2014 247 460

## Description

### BACKGROUND OF THE INVENTION

### Field of the Invention

The present invention relates to a technique for improving printing performance by reducing the load on processing print settings in an information processing apparatus on which a printer driver having a new architecture operates.

### Description of the Related Art

In Windows 8® of Microsoft®, a printer driver operating on a new architecture called the V4 printer driver has been introduced. The V4 printer driver conforms to a successor architecture of an eXtensible Markup Language (XML) Paper Specification (XPS) printer driver which had been offered as a conventional printer driver architecture (V3 architecture). The V4 printer driver uses a print path (XPS print path) in XPS documents.

In this XPS print path, information used to determine an appearance of a printed matter includes print capability information called PrintCapabilities and print setting information called PrintTicket. Both the PrintCapabilities and the PrintTicket are described in an XML format. The V4 printer driver describes the print capability information in a print setting definition file called Generic Printer Description (GPD). Installing the printer driver including the GPD in an operating system (OS) makes it possible to provide an application with a function of changing print settings using the PrintCapabilities and the PrintTicket.

The V4 printer driver is also provided with a mechanism for allowing software other than the OS to edit the PrintCapabilities and the PrintTicket. A module driven by this function is referred to as a print setting editing module. Unlike the conventional V3 architecture, a printer development vendor can edit the PrintCapabilities and the PrintTicket using the print setting editing module implemented by JavaScript®. The print setting editing module makes it possible to perform prohibition processing for solving inconsistency between print settings and to perform processing for adding functions.

For this print setting editing module, there is a conventional technique for preventing a delay of print start (for example, Japanese Patent Application Laid-Open No. 2015-215654). If processing for editing print settings (print setting editing processing) performed during print processing by the V4 printer driver and OS takes time, delayed print start occurs. To prevent such delay, a technique discussed in Japanese Patent Application Laid-Open No. 2015-215654 generates PrintTicket check data (cache) in processing of the print setting editing module, and uses the check data in subsequent verification processing by the print setting editing module. This processing reduces the necessity of processing for reading the PrintTicket by the print setting module to improve the speed of the print setting editing processing.

In a new printing system using the V4 printer driver, the OS performs diverse verification processing at various points in each piece of print processing, including the determination whether there is inconsistency between print settings and the determination whether there is any problem in XML format descriptions in the PrintCapabilities and the PrintTicket. Although the PrintCapabilities and the PrintTicket are described in an XML format and therefore characterized in high readability, character string search and editing processing take time.

The XPS printer driver having the V3 architecture makes it possible to perform processing by using the C/C++ language. In addition, since a printer development vendor was able to bear generation of the PrintTicket including verification, the print setting editing processing did not take time because of the above-described processing by the OS.

On the other hand, the following points have become clear with the V4 printer driver. Firstly, only the print setting editing module implemented by JavaScript® is usable by a vendor. Secondly, since the OS activates the above-described diverse verification processing, the print setting editing processing takes a long time.

Thirdly, therefore, to further improve the printing start, it is necessary not only to improve the processing speed of the print setting editing module as with the conventional technique but also to reduce the processing time due to the verification processing performed by the OS.

In this case, "function count" can be considered as a factor affecting the processing time of verification performed by the OS. The function count refers to the number of functions which can be provided to a user. More specifically, the function count refers to the number of <Features> existing directly under the <PrintTicket> as a Root of the PrintTicket described in the XML format. Fourthly, the increase in the function count largely increases the time taken for the verification of the PrintTicket by the OS. Fifthly, therefore, the overall processing time of the print settings cannot be reduced simply by optimizing the processing of the print setting editing module.

The printer driver is demanded to provide the user with functions supported by an applicable printer to the maximum extent. Therefore, a development vendor offering printer drivers is requested to reduce the processing time of the print setting information while offering as many of these functions as possible.

As prior art there may be mentioned US2014/247460, which discloses systems and methods for addressing conflicts when merging Job Definition Format (JDF) instructions. The system includes a memory that stores rules for prioritizing Job Definition Format (JDF) instructions. The system also includes a controller able to receive a print job and to identify multiple sets of JDF instructions for the print job. The controller is further able to generate a merged set of JDF instructions from the JDF instructions in each of the identified sets, and to identify conflicts within the merged set between JDF instructions that share page ranges with each other. The controller is also able to resolve the conflicts by altering JDF instructions based on the rules stored in memory. EP 3040847 discloses a mechanism for customizing a printer driver without changing a core portion of the driver by defining a customized information about the printer driver as an external file. An install package including an install setting file in which customization information about a printer driver is described in the XML format is distributed to an end user.

### SUMMARY OF THE INVENTION

According to an aspect of the present invention, there is provided an information processing apparatus as specified in claims 1 to 4, 10 and 11. According to a second aspect of the present invention, there is provided a method for an information processing apparatus as specified in claims 5 to 8. According to a third aspect of the present invention, there is provided a computer program as specified in claim 9.

Further features of the present invention will become apparent from the following description of embodiments with reference to the attached drawings.

### BRIEF DESCRIPTION OF THE DRAWINGS

Fig. 1 is a block diagram illustrating an example of a hardware configuration of an information processing apparatus.
Fig. 2 is a block diagram illustrating an example of a module configuration in a print processing system of the present invention.
Fig. 3 is an example of a part of a print setting definition file (Generic Printer Description (GPD)) according to a first embodiment.
Fig. 4, composed of Fig. 4A and Fig. 4B, is an example of a part of PrintCapabilities as print capability information according to the first embodiment.
Fig. 5 is an example of a part of PrintTicket as print setting information according to the first embodiment.
Fig. 6 is a flowchart illustrating processing of a print setting editing module according to the first embodiment.
Fig. 7 illustrates an example of the PrintTicket with related Features deleted according to the first embodiment.
Fig. 8 illustrates an example of the PrintTicket in which related Features are summarized according to the first embodiment.
Fig. 9 illustrates an example of the PrintTicket as an example of an application according to the first embodiment.
Fig. 10 is a flowchart illustrating processing of a print setting editing module according to a second embodiment.
Fig. 11 illustrates an example of information stored in DriverPropertyBag according to the second embodiment.
Fig. 12 illustrates an example of the PrintTicket when "Printing Orientation" is changed from the default setting to "Landscape" according to the second embodiment.
Fig. 13 illustrates an example of the PrintTicket representing only differences of the default settings according to the second embodiment.

### DESCRIPTION OF THE EMBODIMENTS

Modes for embodying the present invention will be described below with reference to the accompanying drawings.

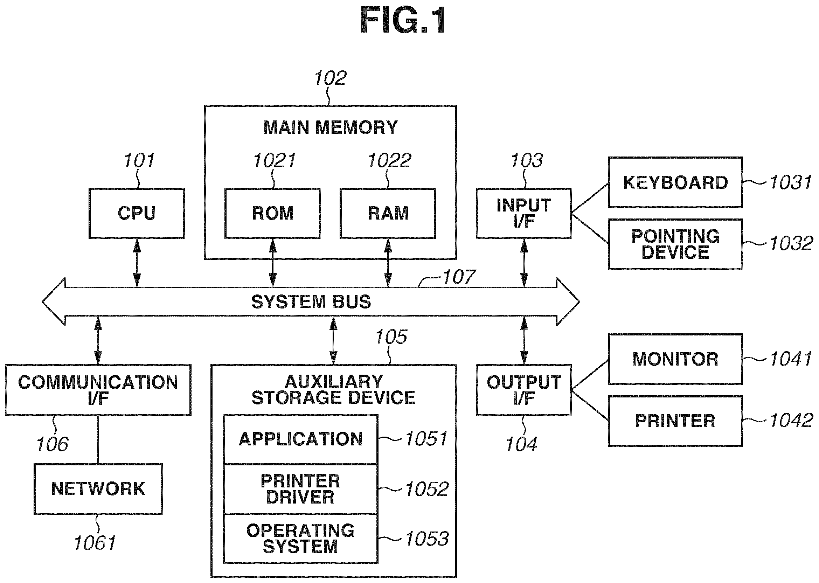

Fig. 1 is a block diagram illustrating an example of a hardware configuration of an information processing apparatus according to a first embodiment. Examples of information processing apparatuses include a personal computer on which various software programs such as an operating system and a printer driver are executed.

A central processing unit (CPU) 101 controls the entire apparatus according to a program stored in a read only memory (ROM) 1021 or a random access memory (RAM) 1022 of a main memory 102, or in an auxiliary storage unit 105. The RAM 1022 is used also as a work area by the CPU 101 to perform various processing. Processing of all components according to the present embodiment operates after a program is loaded into the RAM 1022. The auxiliary storage unit 105 stores an application 1051, a printer driver 1052, and an operating system (OS) 1053. The printer driver 1052 can issue a print instruction to a device having a print function. Input devices such as a keyboard 1031 and a pointing device 1032 represented by a mouse or a touch panel are used by a user to give various instructions to a computer via an input interface (I/F) 103. An output I/F 104, which is an interface for outputting data to the outside, outputs data to output apparatuses such as a monitor 1041 and a printer 1042. The information processing apparatus may be connected to the printer 1042 not only directly (local I/O) but also via a network 1061 connected via a communication I/F 106. A common data system bus 107 exchanges data between interfaces and between modules.

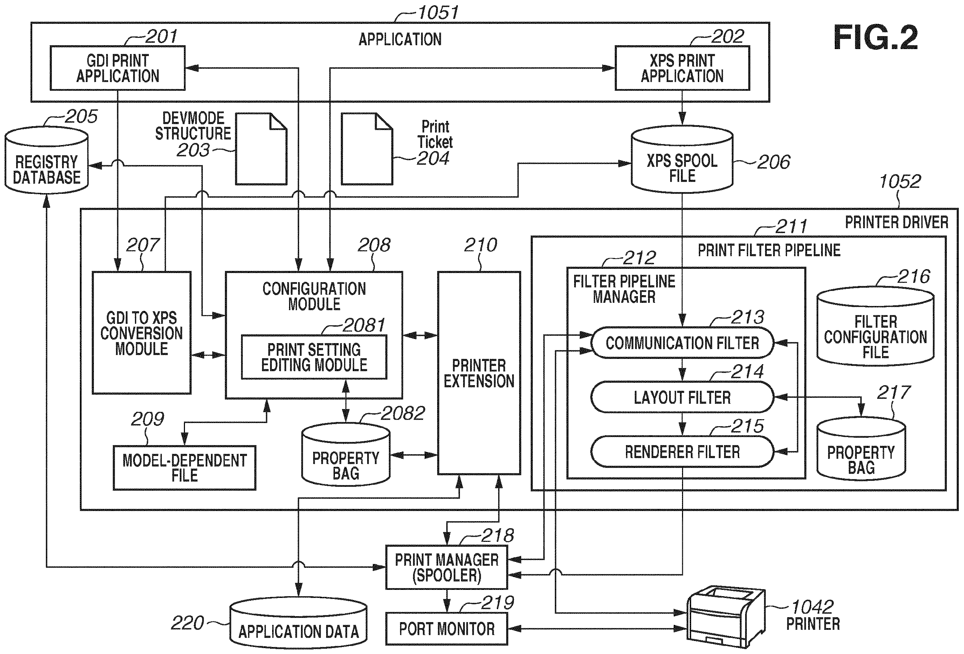

Fig. 2 is a block diagram illustrating an example of a module configuration in a print processing printing system implemented by the application 1051, the printer driver 1052, and the OS 1053.

The present print processing system is assumed to perform printing using an XPS file format as spool data and using the V4 printer driver as the printer driver 1052. The print processing system operates on the OS 1053. A print manager 218, a Graphics Device Interface (GDI) to XPS conversion module 207, a filter pipeline manager 212, and a port monitor 219 are modules included in the OS 1053. A GDI is a graphic component for generating a printing image of the printer 1042. The GDI to XPS conversion module 207 has a function of converting data drawn by the GDI into XPS data. The filter pipeline manager 212 is a module for managing filter print processing as a feature of the XPS print path. The port monitor 219 can control communication between the print manager 218 for accessing a device and the printer 1042. The printer driver 1052 performs print processing via the port monitor 219. Although the GDI to XPS conversion module 207, a configuration module 208, and the filter pipeline manager 212 are included in the printer driver 1052, these modules are positioned as modules of the printer driver 1052 provided by the OS 1053.

The configuration module 208 can edit print setting information using a print setting editing module 2081 provided by the printer driver 1052. The print setting editing module 2081 refers to a program described in JavaScript®, and edits the print setting information using a property bag 2082 provided by the printer driver 1052. The property bag 2082 refers to a data group called DriverPropertyBag for use as model-dependent information of a printer and to an area storing a data group called QueuePropertyBag associated with a print queue. The DriverPropertyBag is model-dependent data of a printer existing in the driver package. After the installation of the printer driver 1052, a data group is stored as read-only data in a specific area in the OS 1053. The QueuePropertyBag can be used by registering an XML definition file in a Key-Value pair in the OS 1053, and can be edited under a certain authority for Value.

Each filter of the printer driver 1052 and the filter pipeline manager 212 is stored in the auxiliary storage unit 105 illustrated in Fig. 1 as the printer driver 1052. According to the present embodiment, two programs (a GDI print application 201 and an XPS print application 202) are illustrated as examples of the application 1051 and stored in the auxiliary storage unit 105 illustrated in Fig. 1. A user performs print processing from the GDI print application 201 (hereinafter abbreviated to a GDI application) indicated on the monitor 1041 as an output unit or the XPS print application 202 (hereinafter abbreviated to an XPS application) using an input apparatus such as the keyboard 1031 or the pointing device 1032 represented by a touch panel or a mouse.

The print processing is implemented by performing three different processing: (1) selection of a printer, (2) generation of print settings, and (3) conversion of drawing data. (1) First of all, the application 1051 selects the printer 1042 subjected to printing.

From a user's point of view, selecting the printer 1042 is synonymous with selecting the printer driver 1052 corresponding to the printer 1042 which performs printing. The application 1051 uses a print queue (not illustrated) to select the printer driver 1052. (2) Then, the application 1051 generates print settings.

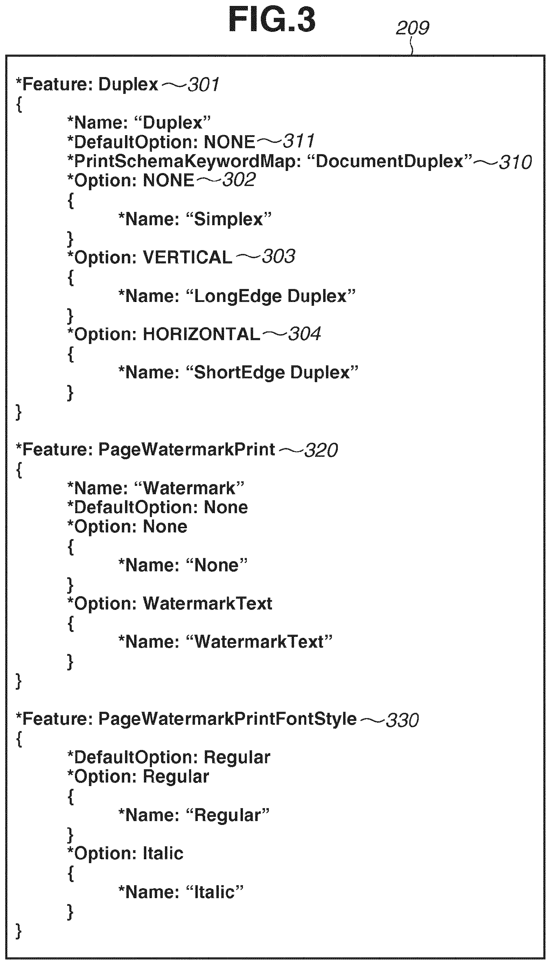

To generate print settings, the application 1051 first allocates a memory area for print settings in the RAM 1022. Then, the application 1051 calls the configuration module 208 of the printer driver 1052 to generate and store print setting data. The GDI print application 201 uses a (binary) DEVMODE structure 203 as print setting data. The XPS print application 202 uses print setting information (PrintTicket) 204 described in the XML markup language. The DEVMODE structure 203 includes a standard area defined by the OS 1053 and an extended area uniquely defined by the printer driver 1052. The PrintTicket 204 is print setting information described in an XML format. The standard area and the extended area include different descriptions according to a name space. PrintSchema defined by the OS 1053 corresponding to the standard area in the PrintTicket 204 is hereinafter referred to as PublicSchema. The PrintSchema uniquely defined by the printer driver 1052 corresponding to the extended area in the PrintTicket 204 is hereinafter referred to as PrivateSchema. Since model-specific information is also included in the print setting data, the configuration module 208 generates the print setting data using a model-dependent file 209. The DEVMODE structure 203 or the PrintTicket 204 stores the print settings. The application 1051 changes the print settings by directly rewriting values. The model-dependent file 209 refers to a print setting definition file called General Printer Definition (GPD) and is described on a text basis, as illustrated in Fig. 3. Fig. 3 illustrates functions indicating "Double-sided setting", "Stamp", and "Stamp text's font style".

The GPD will be specifically described below. In the GPD, describing the print settings according to a description method defined by Microsoft makes it possible to implement a print setting function. For example, a Feature called Duplex indicating "Double-sided setting" is defined as in a line 301 illustrated in Fig. 3. In particular, describing in PrintSchemaKeywordMap the name of the PrintSchema defined by the operating system as in a line 310 makes it possible to handle the PublicSchema. Defining NONE (one-sided printing) 302, VERTICAL (double-sided long-side binding) 303, and HORIZONTAL (double-sided short-side binding) 304 as Options, i.e., double-sided setting items, enables assigning Onesided, TwoSidedLongEdge, and TwoSidedShortEdge to the PrintSchema, respectively. Option described in DefaultOption in a line 311 operates as a default setting.

A line 320 illustrated in Fig. 3 defines a Feature called PageWaterMarkPrint indicating "Stamp". When a Feature called PrintSchemaKeywordMap is not defined like a line 310 for "Double-sided setting", the Feature is defined as PrivatePrintSchema with the name described in the line 320.

Referring to Fig. 3, a line 330 also defines "Stamp text's font style" with a similar description method. The function "Stamp text's font style" refers to a function of setting a style (standard, Italic, etc.) of a character string to be described when printing "Stamp".

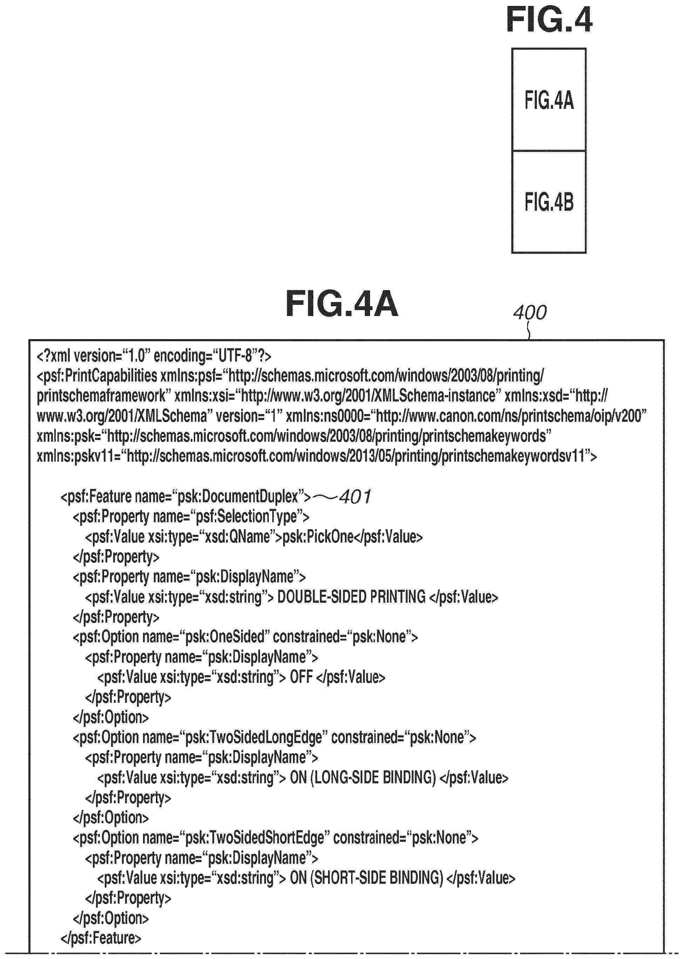

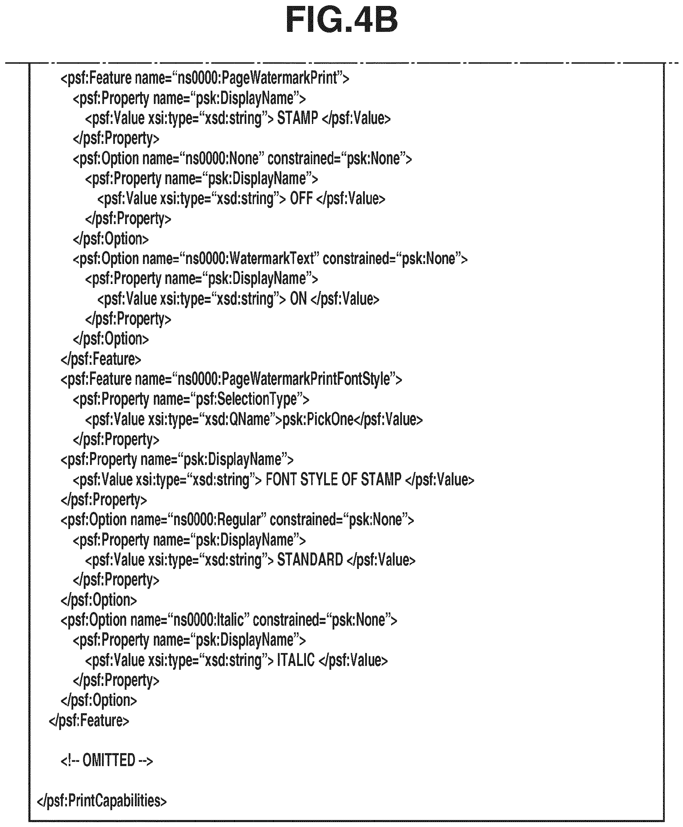

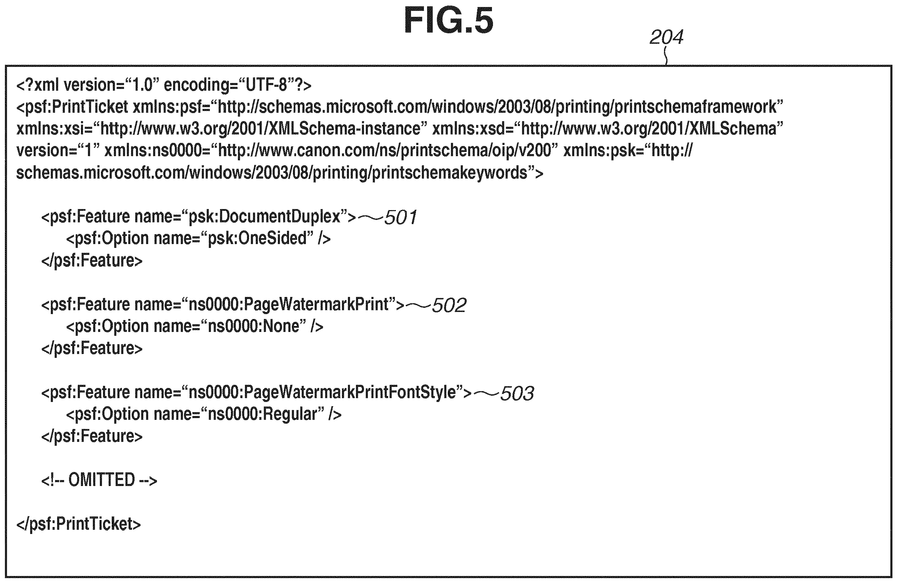

When the above-described GPD is defined, PrintCapabilities 400 (Fig. 4) and the PrintTicket 204 (Fig. 5) are generated by the configuration module 208. The contents described in the GPD and the PrintCapabilities 400 or the PrintTicket 204 are represented in a one-to-one relation. The PrintCapabilities 400 and the PrintTicket 204 are data exchanged between various modules such as the print setting editing module 2081, a printer extension 210, and the GDI to XPS conversion module 207.

Dedicated settings dependent on the printer 1042 can be set by a user interface included in the printer extension 210. Although the printer extension 210 is a type of the printer driver 1052, the printer extension 210 is installed as an application (program) different from the printer driver 1052. According to the setting of the user interface, the printer driver 1052 changes the value of at least any one setting in the DEVMODE structure 203 and the PrintTicket 204.

In the PrintTicket 204, the print settings are described in the XML format so that the XPS print application 202 can easily directly change all of setting values to be rewritten. However, the setting values may be changed using the user interface of the printer extension 210. Although the print settings are generated each time document printing is performed, the user interface stores settings which need to be maintained, such as settings of option devices of the printer 1042 or configuration settings for each user in a registry database 205 of the OS 1053. If the registry database 205 cannot be used, the user interface stores the settings in application data 220. Default values of the print settings are stored in the registry database 205 by the print manager 218 of the OS 1053. The registry database 205 and the application data 220 are stored in the auxiliary storage unit 105. (3) Finally, the application 1051 converts drawing data.

When the print settings have been determined, the user instructs to start print processing via a screen provided by the application 1051. When printing data from the GDI print application 201, the GDI print application 201 sends drawing data to the GDI to XPS conversion module 207 taking a form of a printer driver. Then, an XPS spool file 206 is generated. At this timing, the GDI to XPS conversion module 207 calls the configuration module 208 to convert the print settings from the DEVMODE structure 203 into the PrintTicket 204. At the time of conversion, the print setting editing module 2081 is used. When printing data from the XPS print application 202, the XPS print application 202 itself generates an XPS file, or the OS 1053 generates an XPS file according to a drawing instruction from the XPS print application 202. In either case, the XPS spool file 206 is generated during printing.

When the XPS spool file 206 has been generated, the OS 1053 transfers control to a print filter pipeline 211. The print filter pipeline 211 has a mechanism for performing printing by passing data through a plurality of filters, in which the number and order of filters are controlled based on the filter configuration file 216. According to the present embodiment, the filter pipeline manager 212 operating on the print filter pipeline 211 processes a communication filter 213, a layout filter 214, and a renderer filter 215 in this order based on the filter configuration file 216. The number and types of filters differ according to the configuration of the printer driver 1052. In the print processing in this case, each of the above-described filters processes the XPS spool file 206 and transfers the file to the following filter. The communication filter 213 has a function of communicating with the printer 1042 via the print manager 218 and the port monitor 219, and a function of directly communicating with the printer 1042. The layout filter 214 performs layout-related processing such as change of the magnification, layout for bookbinding, and stamp. The renderer filter 215 renders the XPS spool file 206 to convert it into a Page Description Language (PDL) . PDL data is managed by the print manager 218 for performing print processing schedule management. Print jobs are registered in a queue one after another. When the printer 1042 becomes ready for printing, the print manager 218 transmits print jobs to the printer 1042 in order of registration in the queue via the port monitor 219.

In the above-described printing flow, the PrintTicket 204 is handled by each module. Examples of such processing include print setting change processing by the printer extension 210, and processing for reading the PrintTicket 204 in processing by each filter (the communication filter 213, the layout filter 214, and the renderer filter 215). When performing these pieces of processing, the print setting editing module 2081 is inevitably called via the configuration module 208. More specifically, such a call will be performed several tens of times in each piece of print processing. Each time such call processing is performed, the verification processing on the PrintTicket 204 is performed by the OS 1053. If this processing takes time, the printing start by the printer 1042 will be delayed.

According to the present invention, automatic editing processing of the PrintTicket 204 by the print setting editing module 2081 is additionally performed to reduce the load of the print setting editing processing including the verification processing on the PrintTicket 204 by the OS 1053.

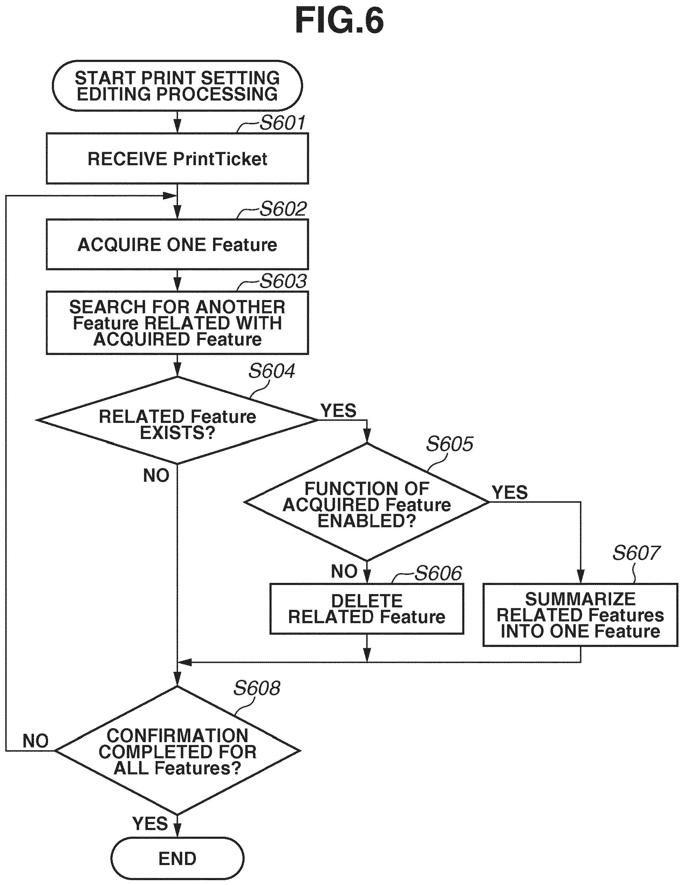

Special processing according to the present embodiment will be described in detail below with reference to a flowchart illustrated in Fig. 6. This processing achieves the reduction of the processing load by the OS 1053 by (temporarily) deleting unnecessary functions from the PrintTicket in the verification by the OS 1053 (steps S606 and S607 described below). The entity that performs each piece of processing in this flowchart is the print setting editing module 2081. Unless otherwise stated in the following descriptions, each piece of processing is performed by the print setting editing module 2081. The print setting editing module 2081 is loaded from the auxiliary storage unit 105 into the RAM 1022 and then executed by the CPU 101.

As a premise, the PrintTicket 204 includes a plurality of mutually-related functions. Examples of such functions include a stamp (PageWaterMarkPrint) 320 and the stamp text's font style (PageWaterMarkPrintFONTSTYLE) 330 which are functions (Features) described above with reference to the example of the GPD illustrated in Fig. 3. The stamp text's font style 330 is a function which is activated when the stamp is ON. Accordingly, for example, when the stamp function is OFF, the description in the PrintTicket 204 related to the stamp text's font style 330 can be a description corresponding to an unnecessary function in the verification processing by the OS 1053. In consideration of this concept, processing by the print setting editing module 2081 will be described below.

First of all, in response to a call of the configuration module 208, the print setting editing module 2081 starts the print setting editing processing.

In step S601, the print setting editing module 2081 receives the PrintTicket 204 transferred from the configuration module 208. In step S602, the print setting editing module 2081 acquires, as a processing target, one of a plurality of Features defined in the received PrintTicket 204.

In step S603, the print setting editing module 2081 searches for a Feature related to the processing target Feature in the PrintTicket 204. According to the present embodiment, as an example for determining a related Feature, the print setting editing module 2081 determines that another Feature having a name of which prefix is matched is a related Feature in search using all (or a part) of names defined by the processing target Feature. For example, referring to an example of the PrintTicket 204 illustrated in Fig. 5, prefix is matched for the PageWatermarkPrint 502 and PageWatermarkPrintFontStyle 503 so that they can be determined to be related to each other.

A condition for determining a relation may be pre-described in the DriverPropertyBag in the property bag 2082, and the print setting editing module 2081 may search for a Feature referring the information described in the DriverPropertyBag. More specifically, a combination of related Features will be pre-registered in the DriverPropertyBag.

According to the present embodiment, the function of the PublicSchema is not to be included as a search target of related functions. In the processing to be described below, processing for changing the definition of the PrintSchema in the PrintTicket is also included. Therefore, if this processing is applied to the PublicSchema defined by the OS 1053, a general application using the PrintTicket 204 may become unable to correctly handle the PrintTicket 204. Such an issue can be prevented by limiting the search target of related functions to the PrivateSchema.

In a case where the print setting editing module 2081 determines that a related Feature exists (YES in step S604), the processing proceeds to step S605. On the other hand, in a case where the print setting editing module 2081 determines that a related Feature does not exist (NO in step S604), the processing proceeds to step S608.

In step S605, the print setting editing module 2081 determines whether the function of the processing target Feature acquired in step S602 is enabled (ON). In a case where the print setting editing module 2081 determines that the function of the processing target Feature is not enabled (NO in step S605), the processing proceeds to step S606. On the other hand, in a case where the print setting editing module 2081 determines that the function is enabled (YES in step S605), the processing proceeds to step S607. According to the present embodiment, the print setting editing module 2081 may determine that the function is enabled when Option for the acquired Feature is not "NONE". Further, a condition for determining that the function is enabled may be pre-described in the DriverPropertyBag, and the print setting editing module 2081 may acquire the information described in the DriverPropertyBag to make the determination based on the information.

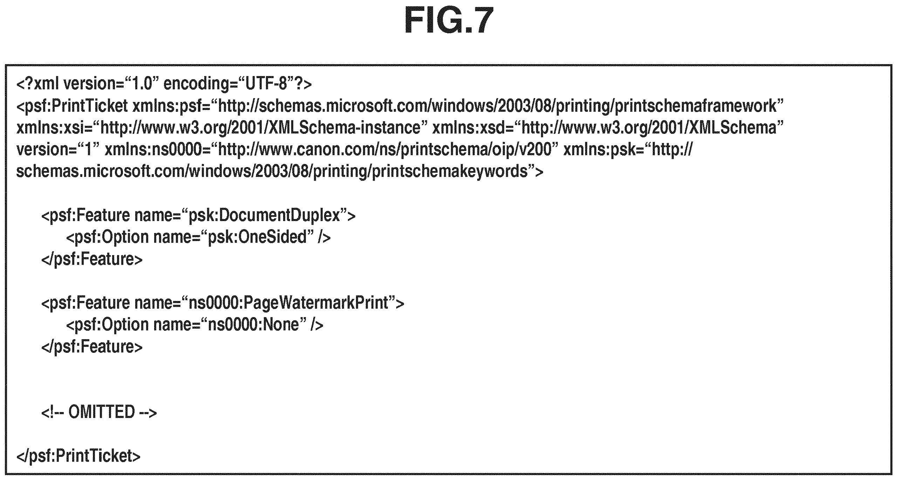

In step S606, the print setting editing module 2081 deletes a Feature determined to be related to the processing target Feature from the PrintTicket 204. This processing will reduce the number of the Features in the PrintTicket 204 which are the processing targets of the verification processing by the OS 1053. Fig. 7 illustrates the PrintTicket 204 after this processing.

For example, in the case of the PrintTicket 204 illustrated in Fig. 5, when the PageWatermarkPrint 502 indicating the "Stamp" function is acquired, the PageWatermarkPrintFontStyle 503 indicating the "Stamp text's font style" function is found as a related function. The "Stamp text's font style" function is a function (print setting) to be used when the "Stamp" function is enabled. For example, when "NONE" indicating the disabled state is specified for the "Stamp" function in the PrintTicket 204, it can be thought to be unnecessary to verify the description for the PageWatermarkPrintFontStyle 503. Therefore, in step S606, the description for the Feature indicated by the PageWatermarkPrintFontStyle 503 as the related function is deleted from the PrintTicket 204.

Further, information "NONE" indicating the disabled state of this function may be pre-described in the DriverPropertyBag, and the print setting editing module 2081 may acquire the information described in the DriverPropertyBag to make the determination based on the information.

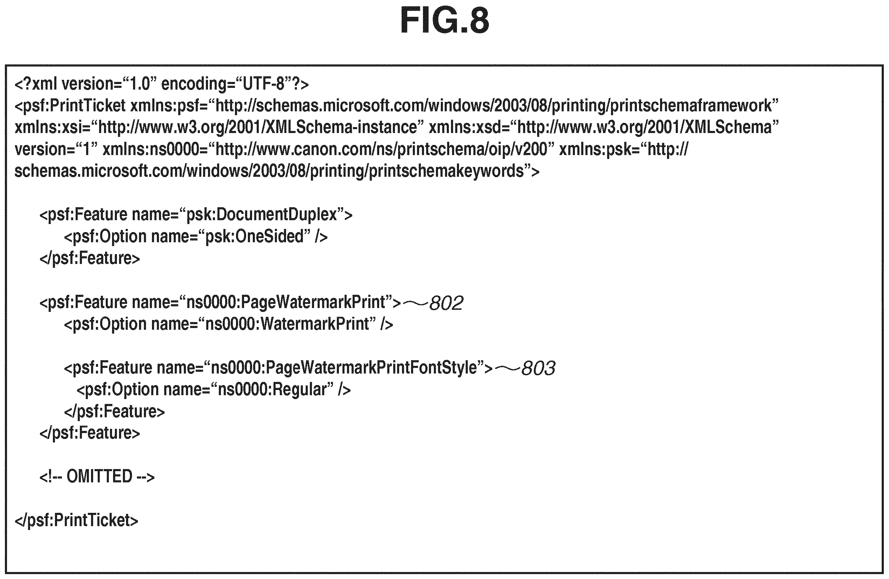

In step S607, the print setting editing module 2081 redefines the description of the Feature determined to be related to the processing target Feature in the PrintTicket so that the description is embedded in the description for the processing target Feature. More specifically, the print setting editing module 2081 edits the PrintTicket so that a plurality of related Features is summarized into one Feature. Similar to the above-described case, the processing in step S607 will be described below based on the "Stamp" function and the "Stamp text's font style" function as examples. When the "Stamp" function is enabled, the "Stamp text's font style" function is enabled. Suppose a case where "WatermarkPrint" indicating that the "Stamp" function is enabled is specified in a line 502. In such a case, as indicated by a line 803 illustrated in Fig. 8, the description for the Feature name of the PageWatermarkPrintFontStyle 503 in the PrintTicket 204 illustrated in Fig. 5 is redefined in the description for PageWatermarkPrint 802.

Factors affecting the processing time of the verification processing on the PrintTicket performed by the OS 1053 include the number of <Features> (function count) existing directly under the <PrintTicket> as the Root of the PrintTicket described in the XML format. According to redefinition processing in step S607, since the number of <Features> existing directly under the <PrintTicket> as the Root of the PrintTicket decreases, the processing load on the OS 1053 can be expected to be reduced.

In step S608, the print setting editing module 2081 determines whether confirmation (check) is completed for all of Features described in the PrintTicket 204. In a case where the confirmation is completed not for all of the Features (NO in step S608), the processing returns to step S602. On the other hand, in a case where the confirmation is completed for all of the Features (YES in step S608), the processing exits this flowchart.

Although the description for the related function is deleted from the PrintTicket in step S606, processing equivalent to the processing for redefining one Feature in step S607 (described below) may be performed. A Feature may be deleted from the PrintTicket 204 not only by deleting the description for a Feature from the PrintTicket but also by preventing the Feature from being recognized in interpreting the PrintTicket, for example, through comment out.

To specifically describe the effect of applying the first embodiment below, the function count and the processing time of the print setting editing processing for different printer models are summarized as experimental results in Table 1 indicated below. Referring to the Table 1, "Function count" indicates the number of functions defined in the PublicSchema and the PrivateSchema for each printer model. "Processing time [S]" indicates the total processing time in processing the PrintTicket through a plurality of function calls by the OS 1053 provided by Microsoft in one piece of print processing in a case where the present embodiment is not applied and a case where the present embodiment is applied.

Presently with the V4 printer driver as a new architecture, not all of the functions supported but only a part of functions by the printer is provided. When only a part of functions, i.e., a small number of functions are provided, the processing time is short regardless of whether the present embodiment is applied, as illustrated in the Table 1. However, when the V4 printer driver comes to provide all of functions including new functions to be provided in the future, the number of the Features defined in the PrintTicket ("Function count") will increase. For this reason, the total processing time by the OS 1053 is expected to increase.

**Table 1**

| | Model A | Model B | Model C |
|---|---|---|---|
| Function count | 97 | 129 | 151 |
| Processing time [s] when first embodiment is not applied | 0.424593 | 0.762707 | 1.001482 |
| Processing time [s] when first embodiment is applied | 0.403589 (14 target functions) | 0.618999 (14 target functions) | 0.869625 (26 target functions) |

As illustrated by the experimental values in the Table 1, in the printing system using the V4 printer driver, the load on the print setting processing is reduced by decreasing the function count according to the present embodiment. Thus, it becomes possible for the printing apparatus to bring forward the printing start while providing the user with functions to the maximum extent. Further, the "target functions" described in the field of the processing time (when the first embodiment is applied) indicates the number of functions deleted by the processing of the flowchart illustrated in Fig. 6, out of the functions defined by the PrivateSchema in the PrintTicket.

### <First Application Example>

According to the first embodiment, there is considered a case where an issue of compatibility with other applications handling the PrintTicket occurs when a function of the PrintTicket 204 is deleted (in step S606) and when the Features are summarized into one (in step S607). For example, with an application that supports the conventional V4 printer driver, it may become unknown, after the implementation of the first embodiment, whether the Feature is not originally provided or whether it has been deleted in the V4 printer driver.

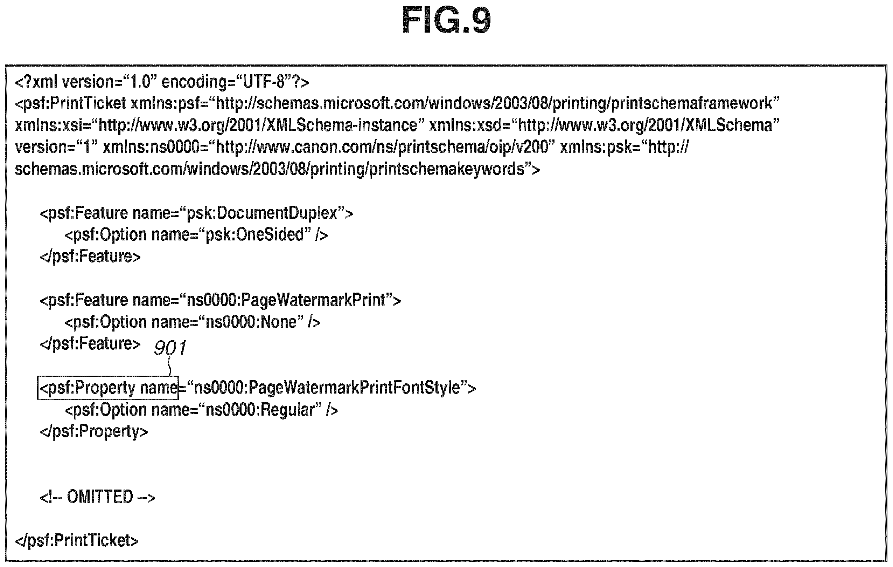

For this reason, the print setting editing module 2081 may solve this issue of compatibility on the application side by further describing tip information in the PrintTicket having undergone the processing illustrated in Fig. 6. More specifically, as illustrated in Fig. 9, the description for the deletion target Feature is redefined as a "Property name" as a line 901 and left in the PrintTicket. As described above, the verification processing on the PrintTicket by the OS 1053 is mainly processing on the <Feature> existing directly under the <PrintTicket> as the Root of the PrintTicket described in the XML format. Therefore, the processing load by the OS 1053 will be prevented from increasing to such an extent by this processing.

### <Second Application Example>

It is also possible to provide setting information indicating whether the processing illustrated in Fig. 6 is enabled in QueuePropetyBag so that whether the processing of the first embodiment (Fig. 6) can be specified from the outside.

According to the above described first embodiment, functions (print settings) to which the processing illustrated in Fig. 6 is applied are limited since one of a plurality of related Features is a deletion target Feature. Now, a present second embodiment ,which is not part of the claimed invention, will be described below centering on a method for deleting other Features as well in the PrintTicket.

In a printing system using the V4 printer driver, when a user performs printing from an application, the user may change print settings using the user interface included in the printer extension 210. However, when issuing one print instruction, the user seldom changes many print settings and basically performs printing based on the default print settings (default settings) in many cases. Further, the user changes only a part of the print settings such as "Double-sided setting", "2 in 1 printing", and "Monochrome printing", which are frequently used.

On the other hand, regardless of whether the user changes many or a few settings, the number of the <Features> existing directly under the <PrintTicket> as the Root of the PrintTicket described in the XML format (function count) remains unchanged. More specifically, for the print setting processing internally performed by the OS 1053 and the print setting editing module 2081 after the user changes settings, the load remains unchanged regardless of the amount of setting changes. Naturally, for the Features corresponding to the print settings included in the default settings, it is assumed to be unnecessary to repeatedly perform the verification processing.

The present embodiment will be described below particularly centering on a mechanism for generating print setting information representing only portions different from the default settings after the user changes settings to reduce the load of processing such as the verification processing on the print setting information (PrintTicket) by the OS 1053.

The hardware configuration and the software configuration according to the present embodiment are similar to those according to the first embodiment, and will be described below centering on processing different from that according to the first embodiment.

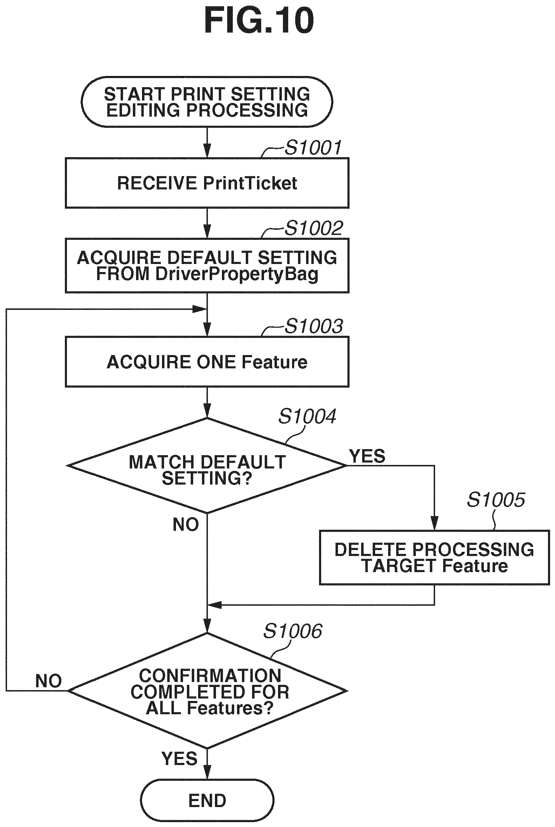

Processing specific to the second embodiment will be described in detail below with reference to a flowchart illustrated in Fig. 10. The module that performs the processing in this flowchart is the print setting editing module 2081. Unless otherwise stated in the following descriptions, each piece of processing is performed by the print setting editing module 2081. The print setting editing module 2081 is loaded from the auxiliary storage unit 105 into the RAM 1022 and then executed by the CPU 101. This processing starts when called by the configuration module 208.

In step S1001, the print setting editing module 2081 receives PrintTicket transferred from the configuration module 208. If a user has changed any print settings, the changed setting values have been reflected on the acquired PrintTicket. In step S1002, the print setting editing module 2081 acquires default settings of the printer driver stored in DriverPropertyBag in the property bag 2082. The default settings of the printer driver refer to a data group in which Feature names and default Option names are stored in a Key-Value pair.

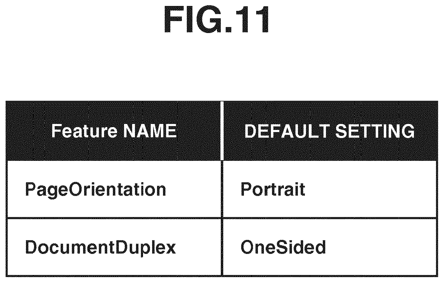

For example, as illustrated in Fig. 11, a default setting value "Portrait" for "PageOrientation" as a Feature indicating a "printing orientation" and a default setting value "Onesided" for "DocumentDuplex" as a Feature indicating a "double-sided setting" are described. Although, in the present embodiment, the data group is represented in the Key-Value pair, it may be represented by other representation methods. The print setting editing module 2081 stores the default setting value of each Feature based on these pieces of information.

In step S1003, the print setting editing module 2081 acquires one of a plurality of Features defined in the received PrintTicket as a processing target.

In step S1004, the print setting editing module 2081 determines whether the setting value of the processing target Feature in the PrintTicket matches with the setting value of the corresponding print setting (function) included in the default settings acquired in step S1002. In a case where the print setting editing module 2081 determines that the two setting values match with each other (YES in step S1004), the processing proceeds to step S1005. On the other hand, in a case where the print setting editing module 2081 determines that the two setting values do not match with each other (NO in step S1004), the processing proceeds to step S1006.

In step S1005, the print setting editing module 2081 deletes the description for the processing target Feature from the PrintTicket.

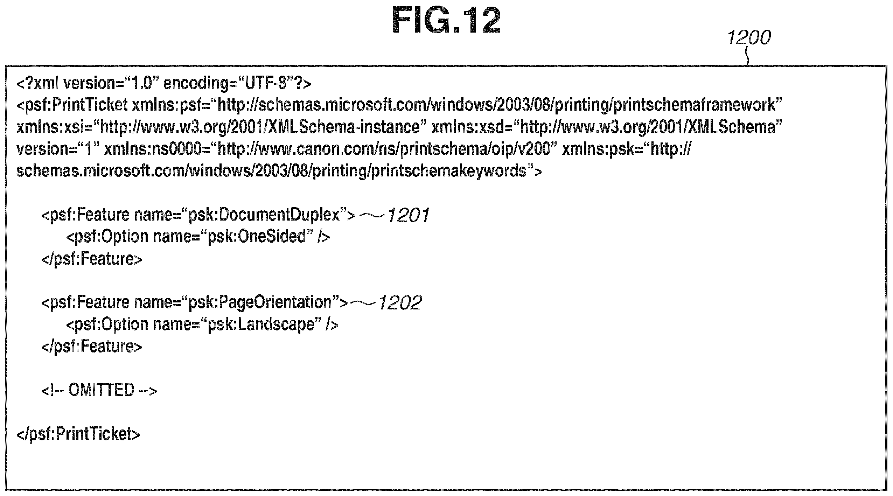

For example, suppose a case where PrintTicket 1200 illustrated in Fig. 12 is received. In the description for one Feature of the PrintTicket 1200, the value of Option for DocumentDuplex 1201 is "OneSided". In the default settings illustrated in Fig. 11, the default setting value of the DocumentDuplex is "OneSided". In this case, the print setting editing module 2081 can determine that the above-described two setting values match with each other (YES in step S1004), then in step S1005, the print setting editing module 2081 deletes the description for the Feature indicating the DocumentDuplex 1201 from the PrintTicket 1200.

Referring to Fig. 12, the value of Option for PageOrientation 1202 in the PrintTicket 1200 is "Landscape". In the default settings illustrated in Fig. 11, the default setting value of the PageOrientation is "Portrait". In this case, the print setting editing module 2081 can determine that the above-described two setting values do not match with each other (NO in step S1004), so that the print setting editing module 2081 does not delete the description for the Feature indicating DocumentDuplex 1201 from the PrintTicket 1200.

In step S1006, the print setting editing module 2081 determines whether confirmation (check) is completed for all of the Features described in the PrintTicket. In a case where the confirmation is completed not for all of the Features (NO in step S1006), the processing returns to step S1003. On the other hand, in a case where the confirmation is completed for all of the Features (YES in step S1006), the processing exits this flowchart.

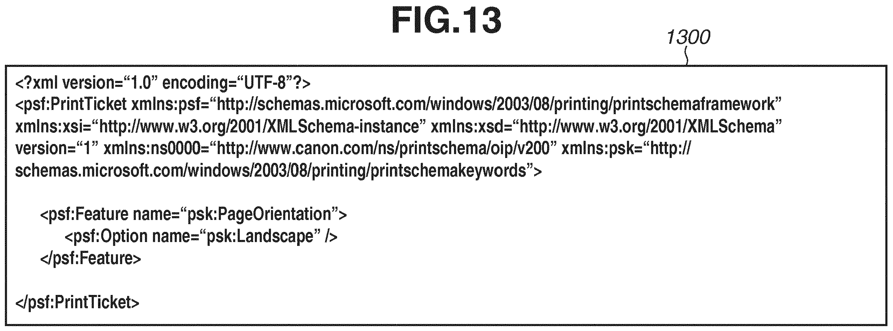

For example, when the user changes the setting of the "printing orientation" from "Portrait" (default setting value) to "Landscape", PrintTicket 1300 illustrated in Fig. 13 is generated by the processing illustrated in Fig. 10. In the PrintTicket 1300, the description for the Feature indicating DocumentDuplex 1201 has been deleted.

Similar to the first embodiment, the Feature of the PublicSchema may not be subjected to the processing illustrated in Fig. 10 (particularly the processing in step S1005) according to the second embodiment. Thus, priority can be given to compatibility with an application handling the PrintTicket.

To specifically describe the effect of applying the second embodiment below, the function count and the processing time of the print setting editing processing for different printer models are summarized as experimental results in Table 2. Terms in the Table 2 have similar meanings to those in the Table 1 described above.

**Table 2**

| | Model A | Model B | Model C |
|---|---|---|---|
| Function count | 97 | 129 | 151 |
| Processing time [s] when second embodiment is not applied | 0.424593 | 0.762707 | 1.001482 |
| Processing time [s] when second embodiment is applied | 0.314390 | 0.503308 | 0.679909 |

According to the second embodiment, the number of functions deleted in the PrintTicket is much larger than the number of functions according to the first embodiment, so that the load on the print setting processing including the verification processing by the OS 1053 can be reduced to a further extent.

Although the present embodiment premises that the default settings are stored in the DriverPropertyBag, the default settings may be stored in the QueuePropertyBag in the property bag 2082. For example, for a user who customizes the default settings before use, an installer (not illustrated) of the printer driver may change the default settings before performing installation. In such a case, the installer stores in the QueuePropetyBag the default settings of the printer driver in the Key-Value pair as described above. In the above-described step S1002, the print setting editing module 2081 acquires the default settings indicated by a data group in the Key-Value pair stored in the QueuePropetyBag and applies the default settings to the subsequent processing.

When applying the present embodiment, the print setting editing module 2081 needs to be able to refer to the default settings since each filter of various applications and the printer driver can only determine differences in print setting changes from the PrintTicket. Therefore, modules capable of accessing the DriverPropertyBag, such as Windows Store Device Apps (WSDA) and the printer extension 210, form a user interface (UI) using the above-described default information stored in the Key-Value pair in the DriverPropertyBag. On the other hand, when the regular GDI print application 201 or the XPS print application 202 handles the PrintTicket, the print setting editing module 2081 refers to the default settings described in PrintCapabilities as print setting performance information since access to the DriverPropertyBag is impossible.

### <Application Example>

Both the processing according to the first embodiment and the processing according to the second embodiment can be performed by the print setting editing module 2081. For example, the processing illustrated in Fig. 6 can be further applied to the PrintTicket having undergone the processing illustrated in Fig. 10.

The present invention further includes apparatuses, systems, and methods configured by suitably combining the above-described embodiments.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer from a network or the storage medium. The storage medium may include one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

## Claims

1. An information processing apparatus executing an operating system (1053) for processing print setting information (204) described in extensible Markup Language (XML), the print setting information (204) comprising a standard area defined by the OS (1053) and an extended area uniquely defined by the printer driver (1052), the information processing apparatus comprising:
a receiving means (S601) for receiving the print setting information (204) generated by the operating system (1053) using a model-dependent file (209) in which, on a text basis, a plurality of functions of a printer as a print target is defined in the extended area, wherein the print setting information includes first information indicating whether a first function is enabled between a first start tag and a first end tag, and second information related to the function between a second start tag and a second end tag, and wherein the print setting information has been arranged in a first arrangement in which the second start tag, the second end tag, and the second information are not between the first start tag and the first end tag;
a search means (2081) for performing a search of a plurality of mutually related functions in the plurality of functions defined in the extended area of the print setting information (204) generated by using the model-dependent file (209) and detecting related information, wherein, by the search, the first information and the second information are detected as the related information; and
an edit means (2081) for performing, in the XML indicating the print setting information, in a case where the plurality of mutually related functions exists in the extended area of the print setting information (204) and the related information is detected, an edit process for reducing a number of functions enumerated in the XML indicating the print setting information by rearranging the print setting information (204) to a second arrangement different to the first arrangement, wherein in the second arrangement the second start tag, the second end tag, and the second information are between the first start tag and the first end tag so that the operating system's processing corresponding to one of the plurality of mutually related functions in the extended area of the print setting information (204) is reduced.

2. The information processing apparatus according to claim 1, wherein, in a case where a value corresponding to one of the plurality of mutually related functions is effective, the print setting information is redefined as the edit process, and in a case where a value corresponding to one of the plurality of mutually related functions is not effective, a description for defining the other of the plurality of mutually related functions is deleted from the XML indicating the print setting information (204) as the edit process.

3. The information processing apparatus according to claim 2, wherein, in a case where a default setting managed by a printer driver matches with a value for the same function included in the XML indicating the print setting information (204), a description for defining a function having the matched value is deleted from the XML indicating the print setting information (204) as the edit process.

4. The information processing apparatus according to any one of the preceding claims, wherein the edit process is implemented by JavaScript® provided by the printer driver, and
wherein at least when print data is generated, the XML indicating the print setting information (204) is referred.

5. A method for an information processing apparatus on which an operating system (1053) for processing print setting information (204) described in eXtensible Markup Language (XML) operates, the print setting information (204) comprising a standard area defined by the OS (1053) and an extended area uniquely defined by the printer driver (1052), the method
comprising:
a receiving step for receiving the print setting information generated by the operating system using a model-dependent file in which, on a text basis, each of a plurality of functions of a printer as a print target is defined in the extended area, wherein the print setting information includes first information indicating whether a function is enabled between a first start tag and a first end tag, and second information related to the function between a second start tag and a second end tag, and wherein the print setting information has been arranged in a first arrangement in which the second start tag, the second end tag, and the second information are not between the first start tag and the first end tag;
a search step (S603) of performing a search of a plurality of mutually related functions in the plurality of functions defined in the extended area of the print setting information (204) generated by using the model-dependent file (209) and detecting related information, wherein, by the search, the first information and the second information are detected as the related information; and
an edit step (S606, S607) of performing, in the XML indicating the print setting information, in a case where the plurality of mutually related functions exists in the extended area of the print setting information (204), an edit process for reducing a number of functions enumerated in the XML indicating the print setting information by rearranging the print setting information (204) to a second arrangement different to the first arrangement, wherein in the second arrangement the second start tag, the second end tag, and the second information are between the first start tag and the first end tag so that the operating system's processing corresponding to one of the plurality of mutually related functions in the extended area of the print setting information (204) is reduced.

6. The method according to claim 5, wherein, in a case where a value corresponding to one of the plurality of mutually related functions is effective, the print setting information is redefined as the edit process, and in a case where a value corresponding to one of the plurality of mutually related functions is not effective, a description for defining the other of the plurality of mutually related functions is deleted from the XML indicating the print setting information (204) as the edit process.

7. The method according to claim 6, wherein, when a default setting managed by a printer driver matches with a value for the same function included in the XML indicating the print setting information (204), a description for defining a function having the matched value is deleted from the XML indicating the print setting information as the edit process.

8. The method according to any one of claims 5 to 7, wherein the edit process is implemented by JavaScript® provided by the printer driver.

9. A computer program comprising instructions which, when the program is executed by a computer, cause the computer to carry out the steps of the method according to any one of claims 5 to 8.

10. The information processing apparatus according to claim 1, wherein the function is a function for adding a stamp, and the second information indicates a font style of the stamp.

11. The information processing apparatus according to claim 1, wherein verification of the print setting information is performed by the operating system of the information processing apparatus.

## Patentansprüche

1. Informationsverarbeitungsvorrichtung, die ein Betriebssystem (1053) zum Verarbeiten von Druckeinstellungsinformation (204) ausführt, die in eXtensible Markup Language (XML) beschrieben ist, wobei die Druckeinstellungsinformation (204) ein durch das Betriebssystem (1053) definiertes Standardgebiet und ein durch den Druckertreiber (1052) eindeutig definiertes erweitertes Gebiet umfasst, wobei die Informationsverarbeitungsvorrichtung umfasst:
eine Empfangseinrichtung (S601) zum Empfangen der durch das Betriebssystem (1053) erzeugten Druckeinstellungsinformation (204) unter Verwendung einer modellabhängigen Datei (209), in der auf einer Textbasis mehrere Funktionen eines Druckers als ein Druckziel im erweiterten Gebiet definiert sind, wobei die Druckeinstellungsinformation zwischen einer ersten Startmarkierung und einer ersten Endmarkierung erste Information enthält, die angibt, ob eine erste Funktion aktiviert ist, und zwischen einer zweiten Startmarkierung und einer zweiten Endmarkierung zweite Information über die Funktion enthält, und wobei die Druckeinstellungsinformation in einer ersten Anordnung angeordnet worden ist, in der die zweite Startmarkierung, die zweite Endmarkierung und die zweiten Information nicht zwischen der ersten Startmarkierung und der ersten Endmarkierung liegen;
eine Sucheinrichtung (2081) zum Durchführen einer Suche nach mehreren wechselseitig in Beziehung stehenden Funktionen in den mehreren Funktionen, die im erweiterten Gebiet der unter Verwendung der modellabhängigen Datei (209) erzeugten Druckeinstellungsinformation (204) definiert sind, und zum Detektieren von diesbezüglicher Information, wobei durch die Suche die erste Information und die zweite Information als die diesbezügliche Information detektiert werden; und
eine Editiereinrichtung (2081) zum Durchführen einer Editierverarbeitung in der die Druckeinstellungsinformation angebenden XML zum Reduzieren einer Anzahl Funktionen, die in der die Druckeinstellungsinformation angebenden XML aufgezählt sind, und zwar durch Neuanordnen der Druckeinstellungsinformation (204) in einer von der ersten Anordnung verschiedenen zweiten Anordnung, falls die mehreren wechselseitig in Beziehung stehenden Funktionen im erweiterten Gebiet der Druckeinstellungsinformation (204) vorhanden sind und die diesbezügliche Information detektiert wird, wobei in der zweiten Anordnung die zweite Startmarkierung, die zweite Endmarkierung und die zweite Information zwischen der ersten Startmarkierung und der ersten Endmarkierung liegen, sodass die einer der mehreren wechselseitig in Beziehung stehenden Funktionen im erweiterten Gebiet der Druckeinstellungsinformation (204) entsprechende Verarbeitung des Betriebssystems reduziert wird.

2. Informationsverarbeitungsvorrichtung nach Anspruch 1, wobei, falls ein Wert, der einer der mehreren wechselseitig in Beziehung stehenden Funktionen entspricht, wirksam ist, als die Editierverarbeitung die Druckeinstellungsinformation neu definiert wird, und falls ein Wert, der einer der mehreren wechselseitig in Beziehung stehenden Funktionen entspricht, nicht wirksam ist, als die Editierverarbeitung eine Beschreibung zum Definieren der anderen der mehreren wechselseitig in Beziehung stehenden Funktionen aus der die Druckeinstellungsinformation (204) angebenden XML gelöscht wird.

3. Informationsverarbeitungsvorrichtung nach Anspruch 2, wobei, falls eine durch einen Druckertreiber verwaltete Standardeinstellung mit einem Wert für dieselbe Funktion übereinstimmt, die in der die
Druckeinstellungsinformation (204) angebenden XML enthalten ist, als die Editierverarbeitung eine Beschreibung zum Definieren einer Funktion mit dem übereinstimmenden Wert aus der die Druckeinstellungsinformation (204) angebenden XML gelöscht wird.

4. Informationsverarbeitungsvorrichtung nach einem der vorhergehenden Ansprüche, wobei die Editierverarbeitung durch JavaScript^{®} implementiert ist, das durch den Druckertreiber bereitgestellt ist, und wobei zumindest dann, wenn Druckdaten erzeugt werden, die die Druckeinstellungsinformation (204) angebende XML referenziert wird.

5. Verfahren für eine Informationsverarbeitungsvorrichtung, auf der ein Betriebssystem (1053) zum Verarbeiten von Druckeinstellungsinformation (204), die in eXtensible Markup Language (XML) beschrieben ist, arbeitet, wobei die Druckeinstellungsinformation (204) ein durch das Betriebssystem (1053) definiertes Standardgebiet und ein durch den Druckertreiber (1052) eindeutig definiertes erweitertes Gebiet umfasst, wobei das Verfahren umfasst:
einen Empfangsschritt zum Empfangen der durch das Betriebssystem erzeugten Druckeinstellungsinformation unter Verwendung einer modellabhängigen Datei, in der auf einer Textbasis eine jeweilige von mehreren Funktionen eines Druckers als ein Druckziel im erweiterten Gebiet definiert ist, wobei die Druckeinstellungsinformation zwischen einer ersten Startmarkierung und einer ersten Endmarkierung erste Information enthält, die angibt, ob eine Funktion aktiviert ist, und zwischen einer zweiten Startmarkierung und einer zweiten Endmarkierung zweite Information über die Funktion enthält, und wobei die Druckeinstellungsinformation in einer ersten Anordnung angeordnet worden ist, in der die zweite Startmarkierung, die zweite Endmarkierung und die zweite Information nicht zwischen der ersten Startmarkierung und der ersten Endmarkierung liegen;
einen Suchschritt (S603) zum Durchführen einer Suche nach mehreren wechselseitig in Beziehung stehenden Funktionen in den mehreren Funktionen, die im erweiterten Gebiet der Druckeinstellungsinformation (204) definiert sind, die unter Verwendung der modellabhängigen Datei (209) erzeugt werden, und zum Detektieren von diesbezüglicher Information, wobei durch die Suche die erste Information und die zweite Information als die diesbezügliche Information detektiert werden; und
einen Editierschritt (S606, S607) zum Durchführen einer Editierverarbeitung in der die Druckeinstellungsinformation angebenden XML zum Reduzieren einer Anzahl Funktionen, die in der die Druckeinstellungsinformation angebenden XML aufgezählt sind, und zwar durch Neuanordnen der Druckeinstellungsinformation (204) in einer von der ersten Anordnung verschiedenen zweiten Anordnung, falls die mehreren wechselseitig in Beziehung stehenden Funktionen im erweiterten Gebiet der Druckeinstellungsinformation (204) vorhanden sind, wobei in der zweiten Anordnung die zweite Startmarkierung, die zweite Endmarkierung und die zweite Information zwischen der ersten Startmarkierung und der ersten Endmarkierung liegen, sodass die einer der mehreren wechselseitig in Beziehung stehenden Funktionen im erweiterten Gebiet der Druckeinstellungsinformation (204) entsprechende Verarbeitung des Betriebssystems reduziert wird.

6. Verfahren nach Anspruch 5, wobei, falls ein Wert, der einer der mehreren wechselseitig in Beziehung stehenden Funktionen entspricht, wirksam ist, als die Editierverarbeitung die Druckeinstellungsinformation neu definiert werden, und falls ein Wert, der einer der mehreren wechselseitig in Beziehung stehenden Funktionen entspricht, nicht wirksam ist, als die Editierverarbeitung eine Beschreibung zum Definieren der anderen der mehreren wechselseitig in Beziehung stehenden Funktionen aus der die Druckeinstellungsinformation (204) angebenden XML gelöscht wird.

7. Verfahren nach Anspruch 6, wobei, wenn eine durch einen Druckertreiber verwaltete Standardeinstellung mit einem Wert für dieselbe Funktion übereinstimmt, die in der die Druckeinstellungsinformation (204) angebenden XML enthalten ist, als die Editierverarbeitung eine Beschreibung zum Definieren einer Funktion mit dem übereinstimmenden Wert aus der die Druckeinstellungsinformation angebenden XML gelöscht wird.

8. Verfahren nach einem der Ansprüche 5 bis 7, wobei die Editierverarbeitung durch Javascript^{®} implementiert ist, das durch den Druckertreiber bereitgestellt wird.

9. Computerprogramm, das Anweisungen umfasst, die, wenn das Programm durch einen Computer ausgeführt wird, den Computer veranlassen, die Schritte des Verfahrens nach einem der Ansprüche 5 bis 8 auszuführen.

10. Informationsverarbeitungsvorrichtung nach Anspruch 1, wobei die Funktion eine Funktion zum Hinzufügen eines Stempels ist und die zweite Information einen Schriftartstil des Stempels angibt.

11. Informationsverarbeitungsvorrichtung nach Anspruch 1, wobei die Verifizierung der Druckeinstellungsinformation durch das Betriebssystem der Informationsverarbeitungsvorrichtung durchgeführt wird.

## Revendications

1. Appareil de traitement d'informations exécutant un système d'exploitation (1053) pour traiter des informations de paramètres d'impression (204) décrites dans un langage de balisage extensible (XML), les informations de paramètres d'impression (204) comprenant une zone standard définie par l'OS (1053) et une zone étendue définie uniquement par le pilote d'imprimante (1052), l'appareil de traitement d'informations comprenant :
un moyen de réception (S601) destiné à recevoir les informations de paramètres d'impression (204) générées par le système d'exploitation (1053) en utilisant un fichier dépendant d'un modèle (209) dans lequel, sur une base de texte, une pluralité de fonctions d'une imprimante, en tant que cible d'impression, sont définies dans la zone étendue, où les informations de définition d'impression comprennent des premières informations indiquant si une première fonction est validée entre une première balise de début et une première balise de fin, et des secondes informations associées à la fonction entre une seconde balise de début et une seconde balise de fin, et où les informations de paramètres d'impression ont été organisées selon un premier agencement dans lequel la seconde balise de début, la seconde balise de fin et les secondes informations ne se trouvent pas entre la première balise de début et la première balise de fin ;
un moyen de recherche (2081) destiné à exécuter une recherche d'une pluralité de fonctions mutuellement associées dans la pluralité de fonctions définies dans la zone étendue des informations de paramètres d'impression (204) générées en utilisant le fichier dépendant d'un modèle (209) et à détecter des informations associées, où, par la recherche, les premières informations et les secondes informations sont détectées en tant que les informations associées ; et
un moyen d'édition (2081) destiné à exécuter, dans le XML indiquant les informations de paramètres d'impression, dans un cas dans lequel la pluralité de fonctions mutuellement associées présentes dans la zone étendue des informations de paramètres d'impression (204) et les informations associées sont détectées, un traitement d'édition ayant pour objet de réduire un nombre de fonctions énumérées dans le XML indiquant les informations de paramètres d'impression par une réorganisation des informations de paramètres d'impression (204) selon un second agencement différent du premier agencement, où, dans le second agencement, la seconde balise de début, la seconde balise de fin et les secondes informations se trouvent entre la première balise de début et la première balise de fin de façon à réduire le traitement du système d'exploitation correspondant à l'une de la pluralité de fonctions mutuellement associées dans la zone étendue des informations de paramètres d'impression (204).

2. Appareil de traitement d'informations selon la revendication 1, dans lequel, dans un cas dans lequel une valeur correspondant à l'une de la pluralité de fonctions mutuellement associées est efficace, les informations de paramètres d'impression sont redéfinies en tant que le traitement d'édition, et dans un cas dans lequel une valeur correspondant à l'une de la pluralité de fonctions mutuellement associées n'est pas efficace, une description à des fins de définition de l'autre de la pluralité de fonctions mutuellement associées est supprimée du XML indiquant les informations de paramètres d'impression (204) en tant que le traitement d'édition.

3. Appareil de traitement d'informations selon la revendication 2, dans lequel, dans un cas dans lequel un paramètre par défaut géré par un pilote d'imprimante correspond à une valeur pour la même fonction comprise dans le XML indiquant les informations de paramètres d'impression (204), une description à des fins de définition d'une fonction ayant la valeur de correspondance est supprimée du XML indiquant les informations de paramètres d'impression (204) en tant que le traitement d'édition.

4. Appareil de traitement d'informations selon l'une quelconque des revendications précédentes, dans lequel le traitement d'édition est mis en œuvre par le langage JavaScript® fourni par le pilote d'imprimante, et
dans lequel au moins lorsque des données d'impression sont générées, le XML indiquant les informations de paramètres d'impression (204) est consulté.

5. Procédé pour un appareil de traitement d'informations sur lequel s'exécute un système d'exploitation (1053) pour traiter des informations de paramètres d'impression (204) décrites dans un langage de balisage extensible (XML), les informations de paramètres d'impression (204) comprenant une zone standard définie par l'OS (1053) et une zone étendue définie uniquement par le pilote d'imprimante (1052), le procédé comprenant :
une étape de réception consistant à recevoir les informations de paramètres d'impression générées par le système d'exploitation en utilisant un fichier dépendant d'un modèle dans lequel, sur une base de texte, chacune d'une pluralité de fonctions d'une imprimante, en tant que cible d'impression, est définie dans la zone étendue, où les informations de paramètres d'impression comprennent des premières informations indiquant si une fonction est validée entre une première balise de début et une première balise de fin, et des secondes informations associées à la fonction entre une seconde balise de début et une seconde balise de fin, et où les informations de paramètres d'impression ont été organisées selon un premier agencement dans lequel la seconde balise de début, la seconde balise de fin et les secondes informations ne se trouvent pas entre la première balise de début et la première balise de fin ;
une étape de recherche (S603) consistant à exécuter une recherche d'une pluralité de fonctions mutuellement associées dans la pluralité de fonctions définies dans la zone étendue des informations de paramètres d'impression (204) générées en utilisant le fichier dépendant d'un modèle (209) et à détecter des informations associées, où, par la recherche, les premières informations et les secondes informations sont détectées en tant que les informations associées ; et
une étape d'édition (S606, S607) consistant à exécuter, dans le XML indiquant les informations de paramètres d'impression, dans un cas dans lequel la pluralité de fonctions mutuellement associées sont présentes dans la zone étendue des informations de paramètres d'impression (204), un traitement d'édition ayant pour objet de réduire un nombre de fonctions énumérées dans le XML indiquant les informations de paramètres d'impression par une réorganisation des informations de paramètres d'impression (204) selon un second agencement différent du premier agencement, où, dans le second agencement, la seconde balise de début, la seconde balise de fin et les secondes informations se trouvent entre la première balise de début et la première balise de fin de façon à réduire le traitement du système d'exploitation correspondant à l'une de la pluralité de fonctions mutuellement associées dans la zone étendue des informations de paramètres d'impression (204).

6. Procédé selon la revendication 5, dans lequel, dans un cas dans lequel une valeur correspondant à l'une de la pluralité de fonctions mutuellement associées est efficace, les informations de paramètres d'impression sont redéfinies en tant que le traitement d'édition, et dans un cas dans lequel une valeur correspondant à l'une de la pluralité de fonctions mutuellement associées n'est pas efficace, une description à des fins de définition de l'autre de la pluralité de fonctions mutuellement associées est supprimée du XML indiquant les informations de paramètres d'impression (204) en tant que le traitement d'édition.

7. Procédé selon la revendication 6, dans lequel, lorsqu'un paramètre par défaut géré par un pilote d'imprimante correspond à une valeur pour la même fonction comprise dans le XML indiquant les informations de paramètres d'impression (204), une description à des fins de définition d'une fonction ayant la valeur de correspondance est supprimée du XML indiquant les informations de paramètres d'impression en tant que le traitement d'édition.

8. Procédé selon l'une quelconque des revendications 5 à 7, dans lequel le traitement d'édition est mis en œuvre par le langage JavaScript® fourni par le pilote d'imprimante.

9. Programme d'ordinateur comprenant des instructions qui, lorsque le programme est exécuté par un ordinateur, amènent l'ordinateur à exécuter les étapes du procédé selon l'une quelconque des revendications 5 à 8.

10. Appareil de traitement d'informations selon la revendication 1, dans lequel la fonction est une fonction d'addition d'une estampille, et les secondes informations indiquent un style de police de caractères de l'estampille.

11. Appareil de traitement d'informations selon la revendication 1, dans lequel une vérification des informations de paramètres d'impression est exécutée par le système d'exploitation de l'appareil de traitement d'informations.
